(19) Europäisches Patentamt
European Patent Office
Office européen des brevets

(11) EP 4 693 537 A1

(12) # EUROPEAN PATENT APPLICATION
published in accordance with Art. 153(4) EPC

(43) Date of publication:
**11.02.2026 Bulletin 2026/07**

(21) Application number: **23929234.5**

(22) Date of filing: **29.03.2023**

(51) International Patent Classification (IPC):
***H01M 10/04*** *(2006.01)* ***H01M 10/0569*** *(2010.01)*

(52) Cooperative Patent Classification (CPC):
**H01M 10/04; H01M 10/0569;** Y02E 60/10

(86) International application number:
**PCT/CN2023/084676**

(87) International publication number:
**WO 2024/197635 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited**
**Ningde, Fujian 352100 (CN)**

(72) Inventors:
- **WANG, Xiang**
  **Ningde, Fujian 352100 (CN)**
- **WANG, Rui**
  **Ningde, Fujian 352100 (CN)**
- **TANG, Chao**
  **Ningde, Fujian 352100 (CN)**

(74) Representative: **Icosa**
**83 avenue Denfert-Rochereau**
**75014 Paris (FR)**

(54) **ELECTROCHEMICAL DEVICE AND ELECTRONIC DEVICE**

(57) An electrochemical device, including a tab and an electrolyte solution. The tab includes a tab metal strap (10). The tab metal strap (10) includes a head blank foil region (101), a tab adhesive coverage region (102), and an ending connection region (103) along a length direction. A tab adhesive (20) is disposed on the tab adhesive coverage region (102), and a thickness of the tab adhesive (20) is t mm, satisfying: 0.025 ≤ t ≤ 0.14. The electrolyte solution includes a non-fluorinated cyclic carbonate, a fluorinated cyclic carbonate, a carboxylate, and a linear carbonate.

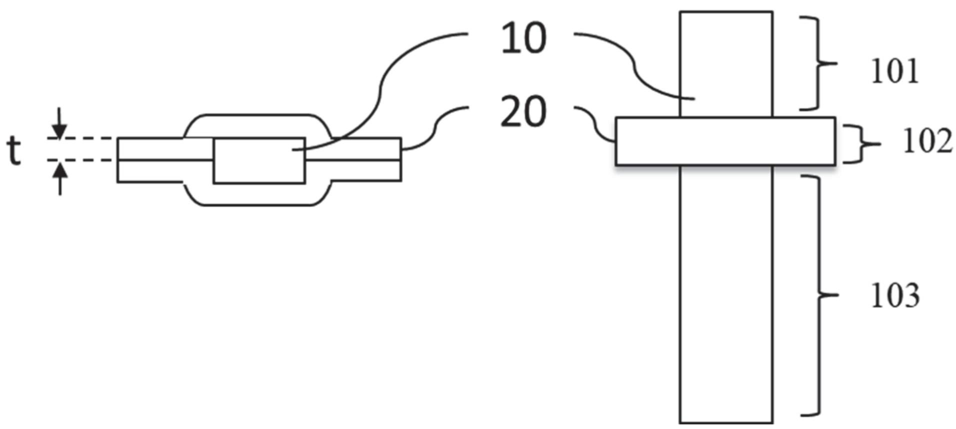


FIG. 1

EP 4 693 537 A1

## Description

### TECHNICAL FIELD

This application relates to the field of energy storage, and in particular, to an electrochemical device, especially a lithium-ion battery.

### BACKGROUND

As a type of convenient electrochemical devices, secondary batteries (especially lithium-ion batteries) have been widely used in electronic products such as laptop computers in recent years. In view of the characteristics of the application field of the products, people’s requirements on the safety of the electronic products are increasingly higher, thereby imposing higher requirements on the storage performance of the electrochemical devices in a high-temperature and high-humidity environment.

Currently, in a commercial lithium-ion battery, a lithium salt (such as $LiPF_6$) is typically dissolved in a solvent to make an electrolyte solution, where the solvent is prepared from a plurality of carbonates such as a cyclic carbonate (for example, ethylene carbonate (EC), and propylene carbonate (PC)) and a linear carbonate (for example, diethyl carbonate (DEC), and dimethyl carbonate (DMC)), so as to form a solid electrolyte interface (SEI) film on the surface of an active material. The SEI film can effectively reduce side reactions of the electrolyte solution on the surface of the active material, and improve the safety performance of the lithium-ion battery.

Moreover, the commercial lithium-ion battery is prone to generate gas after being fully charged and stored for a period, and in turn, expand in volume and incur safety hazards. The storage safety of the lithium-ion batteries is usually improved by adding a positive additive into the electrolyte solution or increasing the tensile sealing force of the battery. The added positive electrode additive can suppress the oxidative decomposition reaction of the carbonate solvent on the positive electrode side, thereby alleviating the gassing phenomena of the lithium-ion battery. However, the positive electrode additive is hardly effective in suppressing the oxidative decomposition reaction of the carbonate solvent in a high-temperature and high-humidity environment. The increased tensile sealing force of the battery can block external moisture from penetrating into the battery package in a high-humidity environment. However, the gassing phenomenon of the electrolyte solution containing the carbonate solvent at a high temperature may intensify heat accumulation inside an electrode assembly and lead to failure to release the internal gas, and in serious cases, may result in violent combustion.

In view of this, it is necessary to continuously research and improve the electrochemical devices and provide an electrochemical device improved in terms of storage safety in a high-temperature and high-humidity environment.

### SUMMARY

This application provides an electrochemical device and an electronic device to solve at least one problem in the related art to at least some extent.

According to a first aspect of this application, some embodiments of this application provide an electrochemical device. The electrochemical device includes a tab and an electrolyte solution. The tab includes a tab metal strap. The tab metal strap includes a head blank foil region, a tab adhesive coverage region, and an ending connection region sequentially along a length direction. A tab adhesive is disposed on the tab adhesive coverage region. A thickness of the tab adhesive is t mm. The electrolyte solution includes at least a non-fluorinated cyclic carbonate, a fluorinated cyclic carbonate, a carboxylate, and a linear carbonate. A thickness of the tab adhesive is t (mm), satisfying: $0.025 \leq t \leq 0.14$. By controlling the thickness of the tab adhesive and the interaction between the constituents of the electrolyte solution, this application can significantly reduce the gassing phenomenon of the electrochemical device at a high temperature, ensure a good sealing effect of the region sealed by the tab adhesive, and enhance the storage safety of the electrochemical device.

In some embodiments, based on a mass of the electrolyte solution, a mass percentage of the non-fluorinated cyclic carbonate is A%, a mass percentage of the fluorinated cyclic carbonate is B%, a mass percentage of the carboxylate is C%, and a mass percentage of the linear carbonate is D%. The electrochemical device satisfies at least one of the following relations:

(1)

$$0.005 \times (C/D + 5) \leq t;$$

(2)

$$0.1 \leq C/D \leq 8;$$

or

(3)

$$4 \leq A/B \leq 20.$$

Through research, it has been found that, by limiting the mass percentages of non-fluorinated cyclic carbonate and the fluorinated cyclic carbonate, limiting the mass percentages of the carboxylate and the linear carbonate, or adjusting the relationship between the thickness of the tab adhesive and the mass percentage of the constituents of the electrolyte solution, this application significantly reduces the gassing phenomena of the electrochemical device at a high temperature, significantly alleviates the expansion of the electrochemical device at a high temperature, and significantly reduces the phenomena that the intruding water reacts with the lithium salt to generate a hydrofluoric acid (HF) in the electrochemical device, thereby significantly improving the storage safety of the electrochemical device.

In some embodiments, the mass percentage A% of the non-fluorinated cyclic carbonate in the electrolyte solution falls within a range of: $10 \leq A \leq 40$. In some embodiments, the mass percentage A% of the non-fluorinated cyclic carbonate in the electrolyte solution falls within a range of: $20 \leq A \leq 40$.

In some embodiments, the mass percentage B% of the fluorinated cyclic carbonate in the electrolyte solution falls within a range of: $1 \leq B \leq 10$. In some embodiments, the mass percentage B% of the fluorinated cyclic carbonate in the electrolyte solution falls within a range of: $1.5 \leq B \leq 7$.

In some embodiments, the mass percentage C% of the carboxylate in the electrolyte solution falls within a range of: $5 \leq C \leq 60$. In some embodiments, the mass percentage C% of the carboxylate in the electrolyte solution falls within a range of: $20 \leq C \leq 50$.

In some embodiments, the mass percentage D% of the linear carbonate in the electrolyte solution falls within a range of: $7 \leq D \leq 60$. In some embodiments, the mass percentage D% of the linear carbonate in the electrolyte solution falls within a range of: $15 \leq D \leq 45$.

In some embodiments, the electrolyte solution satisfies the following relation: $0.2 \leq C/D \leq 4$.

In some embodiments, the electrolyte solution satisfies the following relation: $4 \leq A/B \leq 15$.

When the mass percentage of the non-fluorinated cyclic carbonate, the fluorinated cyclic carbonate, the carboxylate, and/or the linear carbonate in the electrolyte solution satisfy the above condition, this application can optimize a solid electrolyte interface (SEI) film formed on the active material layer of the electrode by the electrolyte solution during cycling, and reduce the gassing phenomena of the electrolyte solution at a high temperature or enhance the cycling kinetics of the electrolyte solution, thereby further improving the storage safety of the electrochemical device in a high-temperature and high-humidity environment.

In some embodiments, the thickness of the tab adhesive satisfies: $0.03 \leq t \leq 0.10$. When the thickness of the tab adhesive falls within the above range, the infiltration of the electrolyte solution into the tab adhesive is further reduced, and the hermeticity of the region sealed by the tab adhesive is improved, thereby further improving the storage safety of the electrochemical device in a high-temperature and high-humidity environment.

In some embodiments, an adhesion force of the tab adhesive to the tab adhesive coverage region is f N/mm, satisfying: $3 \leq f \leq 55$. The adhesion force of the tab adhesive to the tab adhesive coverage region affects the tensile sealing force applied to the electrochemical device during sealing. When the adhesion force of the tab adhesive to the tab adhesive coverage region falls within the above range, the tab adhesive can provide excellent sealing and bonding strength, thereby preventing external moisture from penetrating into the battery in a high-humidity environment, preventing internal erosion of the electrolyte solution, and in turn, further improving the storage safety of the electrochemical device in a high-temperature and high-humidity environment.

In some embodiments, the water content of the electrolyte solution is r ppm, satisfying: $200 \leq r \leq 2000$. Controlling the water content in the electrolyte solution can reduce the reactions between the lithium salt and the moisture at a high temperature to form a hydrofluoric acid.

In some embodiments, the non-fluorinated cyclic carbonate includes one or more of ethylene carbonate, propylene carbonate, vinylene carbonate, or vinyl ethylene carbonate.

In some embodiments, the fluorinated cyclic carbonate includes one or more of fluorinated ethylene carbonate or difluoroethylene carbonate.

In some embodiments, the linear carbonate includes one or more of dimethyl carbonate, diethyl carbonate, ethyl methyl carbonate, trifluoroethyl methyl carbonate, trifluoromethyl ethylene carbonate, or bis(2,2,2-trifluoroethyl) carbonate.

In some embodiments, the carboxylate includes a compound represented by the following Formula I:

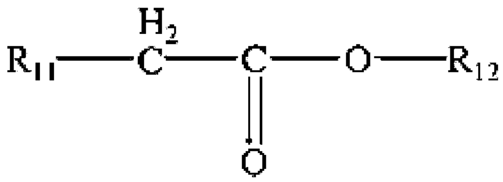

Formula I.

In the formula above, $R_{11}$ is selected from hydrogen, hydroxyl, a substituted or unsubstituted $C_1$ to $C_{12}$ alkyl, a substituted or unsubstituted $C_1$ to $C_{12}$ alkoxyl, a substituted or unsubstituted $C_2$ to $C_{12}$ alkenyl, a substituted or unsubstituted $C_6$ to $C_{12}$ aryl, or a substituted or unsubstituted $C_6$ to $C_{26}$ aryloxy;

$R_{12}$ is selected from hydrogen, a substituted or unsubstituted $C_1$ to $C_{20}$ alkyl, a substituted or unsubstituted $C_2$ to $C_{12}$ alkenyl, or a substituted or unsubstituted $C_6$ to $C_{26}$ aryl; and a substituent for the substitution is halogen.

In some embodiments, the carboxylate includes one or more of propyl propionate (PP), ethyl propionate (EP), ethyl acetate (EA), ethyl formate, methyl acetate, propyl acetate, butyl butyrate, ethyl difluoroacetate, difluoroethyl acetate, ethyl trifluoroacetate, trifluoroethyl acetate, methyl propionate, or methyl trifluoropropionate.

In some embodiments, the electrolyte solution further includes a nitrile compound. Based on a mass of the electrolyte solution, a mass percentage of the nitrile compound is 0.1% to 12%, and the nitrile compound includes one or more of compounds represented by Formula II to Formula V:

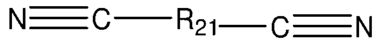 Formula II,

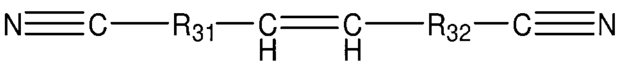 Formula III,

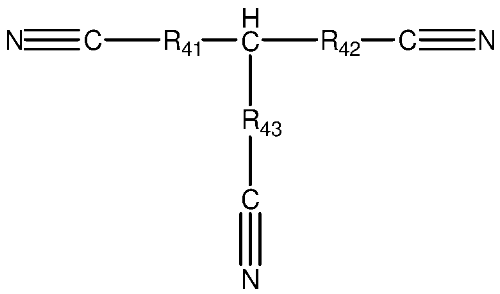

Formula IV,

and

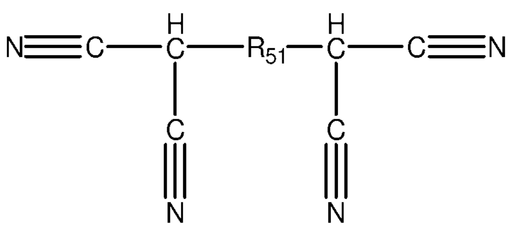

Formula V.

In the formulas above:

$R_{21}$ is selected from a substituted or unsubstituted $C_1$ to $C_{12}$ alkylidene or a substituted or unsubstituted $C_1$ to $C_{12}$ alkyleneoxy;
$R_{31}$ and $R_{32}$ each independently are selected from a single bond or a substituted or unsubstituted $C_1$ to $C_{12}$ alkylidene;
$R_{41}$, $R_{42}$, and $R_{43}$ each independently are selected from a single bond, a substituted or unsubstituted $C_1$ to $C_{12}$ alkylidene, or a substituted or unsubstituted $C_1$ to $C_{12}$ alkyleneoxy; and
$R_{51}$ is selected from a substituted or unsubstituted $C_1$ to $C_{12}$ alkylidene, a substituted or unsubstituted $C_2$ to $C_{12}$ alkenylene, a substituted or unsubstituted $C_6$ to $C_{26}$ arylene, or a substituted or unsubstituted $C_2$ to $C_{12}$ heterocyclylene group; and
A substituent for the substitution is halogen.

In some embodiments, the nitrile compound includes one or more of the following compounds: malononitrile, succinonitrile, glutaronitrile, adiponitrile, pimelonitrile, suberonitrile, sebaconitrile, 3,3'-oxydipropionitrile, hex-2-enedinitrile, fumaronitrile, 2-pentenedinitrile, methyl glutaronitrile, 4-cyanopimelonitrile, (Z)-but-2-enedinitrile, 2,2,3,3-tetrafluorosuccinonitrile, ethylene glycol bis(propionitrile) ether, 1,3,5-pentanetricarbonitrile, 1,3,6-hexanetricarbonitrile, 1,2,6-hexanetricarbonitrile, 1,2,3-tris(2-cyanoethoxy)propane, 1,1,3,3-propanetetracarbonitrile,

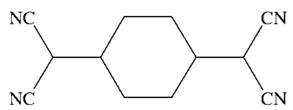 , 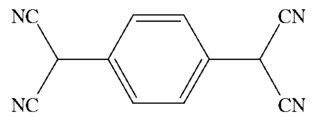 ,

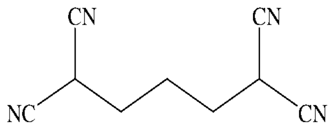 , 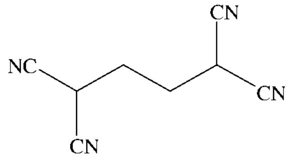 , 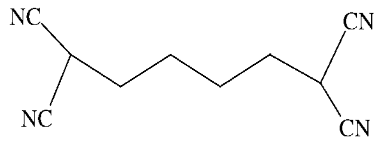 ,

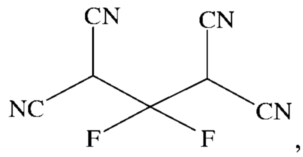 , 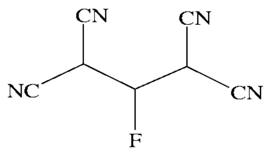 , or 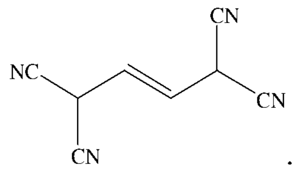 .

In some embodiments, based on the mass of the electrolyte solution, the mass percentage of the nitrile compound is 1% to 8%.

The cyano group in the nitrile compound is highly coordinative, and can complex with high-valence metal ions (for example, nickel, cobalt, and manganese) on the surface of the electrode to mask the ionic activity, suppress the decomposition and gassing of the electrolyte solution on the surface of the electrode, and enhance the oxidation resistance of the electrolyte solution, thereby further improving the storage safety of the electrochemical device in a high-temperature and high-humidity environment.

In some embodiments, the electrolyte solution further includes a lithium salt. The lithium salt includes one or more of $LiPF_6$, $LiBF_4$, $LiAsF_6$, $LiClO_4$, $LiB(C_6H_5)_4$, $LiCH_3SO_3$, $LiCF_3SO_3$ (LiFSI), $LiN(SO_2CF_3)_2$ (LiTFSI), $LiC(SO_2CF_3)_3$, $LiSiF_6$, LiBOB, or LiDFOB.

In some embodiments, the mass percentage of the lithium salt is 5% to 20% based on the mass of the electrolyte solution. Controlling the content of the lithium salt can optimize the storage performance of the electrochemical device in a high-temperature and high-humidity environment.

According to another aspect of this application, some embodiments of this application provide an electronic device. The electronic device contains the electrochemical device disclosed in the preceding embodiment.

This application can significantly optimize the storage safety of the electrochemical device in a high-temperature and high-humidity environment by controlling the content relationship between the non-fluorinated cyclic carbonate, the fluorinated cyclic carbonate, the carboxylate, and the linear carbonate in the electrolyte solution and by adjusting the thickness of the tab adhesive.

Additional aspects and advantages of this application will be partly described or illustrated herein later or expounded through implementation of an embodiment of this application.

## BRIEF DESCRIPTION OF DRAWINGS

For ease of describing an embodiment of this application, the following outlines the drawings needed for describing an embodiment of this application or the prior art. Evidently, the drawings outlined below are merely a part of embodiments in this application. Without making any creative efforts, a person skilled in the art can still derive the drawings of other embodiments according to the structures illustrated in the drawings.

FIG. 1 is a schematic structural side view and a schematic top view of a tab according to some embodiments of this application; and

FIG. 2 is a schematic structural side view and a schematic top view of a sealing portion according to some embodiments of this application.

## DETAILED DESCRIPTION OF EMBODIMENTS

Some embodiments of this application will be described in detail below. No embodiment of this application is to be construed as a limitation on this application.

In the detailed description of embodiments and claims, a list of items recited by using the terms such as "at least one of", "at least one thereof", "one or more of", "one or more thereof" may mean any combination of the recited items. For example, if items A and B are recited, the phrases "one or more of A and B" and "one or more of A or B" mean: A alone; B alone; or both A and B. In another example, if items A, B, and C are recited, the phrases "one or more of A, B, and C" and "one or more of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

Further, for ease of description, "first", "second", "third", and the like may be used herein to distinguish between different components in one drawing or a series of drawings. Unless otherwise expressly specified or defined, the terms "first", "second", "third", and the like are not intended to describe the corresponding components.

In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

Unless otherwise expressly specified, the following terms used herein have the meanings defined below.

The term "$C_x$" represents carbon atoms that are x in number. For example, a $C_1$ to $C_{10}$ alkyl is an alkyl group containing 1 to 10 carbon atoms.

The term "alkyl" is intended to be a linear saturated hydrocarbon structure containing 1 to 20 carbon atoms. "Alkyl" also means a branched or cyclic hydrocarbon structure containing 3 to 20 carbon atoms. For example, the alkyl may be a $C_1$ to $C_{20}$ alkyl, a $C_1$ to $C_{10}$ alkyl, a $C_1$ to $C_5$ alkyl, a $C_5$ to $C_{20}$ alkyl, a $C_5$ to $C_{15}$ alkyl, or a $C_5$ to $C_{10}$ alkyl. An alkyl containing a specified quantity of carbon atoms is intended to cover all geometric isomers containing the specified quantity of carbon atoms. Therefore, for example, "butyl" is intended to include n-butyl, sec-butyl, isobutyl, tert-butyl, and cyclobutyl; and "propyl" includes n-propyl, isopropyl, and cyclopropyl. Examples of alkyl include, but are not limited to, methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, cyclopropyl, cyclobutyl, norbornyl, and the like. In addition, the alkyl may be optionally substituted.

The term "alkenyl" means a linear or branched monovalent unsaturated hydrocarbon group containing at least one carbon-carbon double bond, and typically, 1, 2, or 3 carbon-carbon double bonds. Unless otherwise defined, an alkenyl typically contains 2 to 20 carbon atoms, and may be, for example, a $C_2$ to $C_{20}$ alkenyl, a $C_6$ to $C_{20}$ alkenyl, a $C_2$ to $C_{12}$ alkenyl, or a $C_2$ to $C_6$ alkenyl. Representative alkenyls include, for example, vinyl, n-propenyl, isopropenyl, n-but-2-enyl, but-3-enyl, n-hex-3-enyl, and the like. In addition, the alkenyl may be optionally substituted.

The term "alkynyl" means a linear or branched monovalent unsaturated hydrocarbon group containing at least one carbon-carbon triple bond, and typically, 1, 2, or 3 carbon-carbon triple bonds. Unless otherwise defined, an alkynyl typically contains 2 to 20 carbon atoms, and may be, for example, a $C_2$ to $C_{20}$ alkynyl, a $C_6$ to $C_{20}$ alkynyl, a $C_2$ to $C_{10}$ alkynyl, or a $C_2$ to $C_6$ alkynyl. Representative alkynyls include, for example, ethynyl, prop-2-ynyl (n-propynyl), n-but-2-ynyl, n-hex-3-ynyl, and the like. In addition, the alkynyl may be optionally substituted.

The term "alkoxyl" means an alkyl group (-O-alkyl) attached to a parent structure through an oxygen atom. Examples of the alkoxyl include, but are not limited to, methoxy, ethoxy, propoxy, isopropoxy, cyclopropoxy, butoxy, sec-butoxy, tert-butoxy, pentyloxy, cyclohexyloxy, and the like.

The term "aryl" covers a monocyclic system and a polycyclic system. "Polycyclic" means two or more rings, in which two adjacent rings (the rings are "condensed") share two carbon atoms. Among the rings, at least one ring is aromatic, and other rings may be, for example, a cycloalkyl, cycloalkenyl, aryl, or a heterocyclic and/or heteroaryl. For example, the aryl may be a $C_6$ to $C_{50}$ aryl, a $C_6$ to $C_{40}$ aryl, a $C_6$ to $C_{30}$ aryl, a $C_6$ to $C_{20}$ aryl, or a $C_6$ to $C_{10}$ aryl. Representative aryls include (for example), phenyl, methylphenyl, propylphenyl, isopropylphenyl, benzyl, naphth-1-yl, naphth-2-yl, and the like. In addition, the aryl may be optionally substituted.

The term "aryloxy" means an alkaryl (-O-aryl) group attached to a parent structure through an oxygen atom. Examples of the aryloxy include, but are not limited to, phenoxy, benzyloxy, 4-methylphenoxy, 3-methylphenoxy, 2-methylphenoxy, 4-ethylphenoxy, 3-ethylphenoxy, 2-ethylphenoxy, 4-n-propylphenoxy, 3-n-propylphenoxy, 2-n-propylphenoxy, 4-isopropylphenoxy, 3-isopropylphenoxy, 2-isopropylphenoxy, 4-n-butylphenoxy, 3-n-butylphenoxy, 2-n-butylphenoxy, 4-isobutylphenoxy, 3-isobutylphenoxy, 2-isobutylphenoxy, 4-tert-butylphenoxy, 3-tert-butylphenoxy, 2-tert-butylphenoxy, 3, 5-dimethylphenoxy, 2,6-dimethylphenoxy, 3,5-diethylphenoxy, 2,6-diethylphenoxy, 3,5-di-n-propylphenoxy, 2,6-n-propylmethylphenoxy, 3,5-diisopropylphenoxy, 2,6-diisopropylphenoxy, 3,5-di-n-butylphenoxy, 2,6-di-n-butylphenoxy, 4-methylbenzyloxy, 3-methylbenzyloxy, 2-methylbenzyloxy, 4-ethylbenzyloxy, 3-ethylbenzyloxy, 2-ethylbenzyloxy, 3,5-diisopropylbenzyloxy, 2,6-diisopropylbenzyloxy, 1-naphthyloxy, and 2-naphthyloxy.

The term "heterocyclyl" covers aromatic and non-aromatic cyclic groups. A heteroaromatic cyclic group also means an aromatic hetero group. In some embodiments, a heteroaromatic cyclic group and a hetero-non-aromatic cyclic group are a $C_1$ to $C_{50}$ heterocyclyl, $C_1$ to $C_{40}$ heterocyclyl, $C_1$ to $C_{30}$ heterocyclyl, $C_1$ to $C_{20}$ heterocyclyl, $C_1$ to $C_{10}$ heterocyclyl, or $C_1$ to $C_6$ heterocyclyl, which, in each case, contains at least one heteroatom. Representative heterocyclyl groups include, for example, morpholinyl, piperidinyl, pyrrolidinyl, and the like, as well as cyclic ethers, such as tetrahydrofuran, tetrahydropyran, and the like. In addition, the heterocyclyl group may be optionally substituted.

The term "halogen" herein may be F, Cl, Br, or I.

In the field of electrochemical energy storage, the electrochemical devices have been applied in an increasingly wider range of fields, and the application environments encountered by the electrochemical devices are increasingly diversified. Consequently, the safety performance of the electrochemical devices needs to be researched and optimized continuously to maintain desirable cycle performance and storage performance in extreme environments.

Under high-temperature and high-humidity operation conditions, the directivity of the electrochemical devices needs to be considered. For example, most of the electrochemical devices (for example, lithium-ion batteries) use a mixture of a carbonate solvent, a lithium salt, and some additives as an electrolyte solution. The carbonate solvent is highly capable of forming and reinstating an SEI film, and is a common solvent for maintaining normal charging and discharging of a commercial lithium-ion battery system. Generally, the formation of the SEI film can effectively reduce the side reactions such as gas production and lithium plating caused by the direct contact between the electrolyte solution and the positive/negative active material. However, in a high-temperature environment, the carbonate solvent is prone to oxidative decomposition and gassing on a positive electrode.

The electrochemical device requires a specified level of sealing strength to isolate and block the external environment from affecting the internal electrode assembly, and reduce the phenomena of battery failure caused by moisture permeation in a high-humidity environment. However, excessive sealing strength may result in heat accumulation inside the electrode assembly and lead to failure to release the internal gas, and in serious cases, may result in violent combustion.

Looking into the mechanism, the electrolyte solution protection additive, the solvent, the water content, and battery cell sealing reliability play different roles in the failure mode of the electrochemical device under high-temperature and high-humidity operating conditions.

In view of the above problem, this application provides an electrochemical device, including a tab and an electrolyte solution. The tab includes a tab metal strap. The tab metal strap includes a head blank foil region, a tab adhesive coverage region, and an ending connection region along a length direction. A tab adhesive is disposed on the tab adhesive coverage region, and a thickness of the tab adhesive is t mm, satisfying: $0.025 \leq t \leq 0.14$. The electrolyte solution includes a non-fluorinated cyclic carbonate, a fluorinated cyclic carbonate, a carboxylate, and a linear carbonate. By controlling the thickness of the tab adhesive and the interaction between the constituents of the electrolyte solution, this application can significantly reduce the gassing phenomena of the electrochemical device at a high temperature, ensure a good sealing effect of the region sealed by the tab adhesive, alleviate erosion of the electrolyte solution, and enhance the storage safety of the electrochemical device, especially the storage safety in a high-temperature high-humidity environment.

Based on a mass of the electrolyte solution, a mass percentage of the non-fluorinated cyclic carbonate is A%, a mass percentage of the fluorinated cyclic carbonate is B%, a mass percentage of the carboxylate is C%, and a mass percentage of the linear carbonate is D%. The electrochemical device satisfies at least one of the following relations: (1) $0.005 \times (C/D + 5) \leq t$; (2) $0.1 \leq C/D \leq 8$; or (3) $4 \leq A/B \leq 20$. By adjusting the contents of the carboxylate and the linear carbonate in the electrolyte solution, a part of the carbonate is replaced by the carboxylate, the gassing phenomena of the electrolyte solution is alleviated, and the erosion of the tab adhesive by the electrolyte solution is alleviated. In addition, the reaction of the cyclic carbonate at the positive electrode at a high temperature is one of the main reasons for the gassing of the electrolyte solution. Therefore, by limiting the mass percentages of non-fluorinated cyclic carbonate and the fluorinated cyclic carbonate, limiting the mass percentages of the carboxylate and the linear carbonate, or adjusting the relationship between the thickness of the tab adhesive and the mass percentage of the constituents of the electrolyte solution, this application significantly reduces the gassing phenomena of the electrochemical device at a high temperature, significantly alleviates the combustion phenomena caused by the expansion of the electrochemical device at a high temperature, and significantly reduces the phenomena that the intruding water reacts with the lithium salt to generate a hydrofluoric acid (HF) in the electrochemical device, thereby significantly improving the storage safety of the electrochemical device.

In some embodiments, the content relationship between the carboxylate and the linear carbonate is $0.2 \leq C/D \leq 4$. In some embodiments, the content relationship between the carboxylate and the linear carbonate is $0.5 \leq C/D \leq 3$. In some embodiments, the content relationship between the carboxylate and the linear carbonate is $1 \leq C/D \leq 2$. In some embodiments, the content relationship between the carboxylate and the linear carbonate, denoted as C/D, is 0.1, 0.2, 0.5, 1.0, 2.0, 3.0, 4.0, 5.0, 6.0, 7.0, 8.0, or a value falling within a range formed by any two thereof. When the content relationship between the carboxylate and the linear carbonate falls within the foregoing range, the storage safety of the electrochemical device in a high-temperature and high-humidity environment is further improved.

In some embodiments, the content relationship between the non-fluorinated cyclic carbonate and the fluorinated

cyclic carbonate is $4 \leq A/B \leq 20$. In some embodiments, the content relationship between the non-fluorinated cyclic carbonate and the fluorinated cyclic carbonate is $4 \leq A/B \leq 15$. In some embodiments, the content relationship between the non-fluorinated cyclic carbonate and the fluorinated cyclic carbonate is $5 \leq A/B \leq 15$. In some embodiments, the content relationship between the non-fluorinated cyclic carbonate and the fluorinated cyclic carbonate, denoted as A/B, is 4, 5, 7, 9, 11, 14.5, 17, 18, 20, or a value falling within a range formed by any two thereof. When the content relationship between the non-fluorinated cyclic carbonate and the fluorinated cyclic carbonate falls within the foregoing range, the storage safety of the electrochemical device in a high-temperature and high-humidity environment is further improved.

In some embodiments, $10 \leq A \leq 40$. In some embodiments, $20 \leq A \leq 40$. In some embodiments, the mass percentage A% of the non-fluorinated cyclic carbonate is 10%, 15%, 20%, 25%, 30%, 35%, 40%, or a value falling within a range formed by any two thereof.

In some embodiments, $1 \leq B \leq 10$. In some embodiments, $1.5 \leq B \leq 7$. In some embodiments, $1.5 \leq B \leq 5$. In some embodiments, the mass percentage B% of the fluorinated cyclic carbonate is 1%, 1.5%, 2%, 3%, 4%, 5%, 6%, 7%, 8%, 9%, 10%, or a value falling within a range formed by any two thereof.

In some embodiments, the value of C satisfies $5 \leq C \leq 60$. In some embodiments, the value of C satisfies $10 \leq C \leq 55$. In some embodiments, the value of C satisfies $20 \leq C \leq 50$. In some embodiments, the value of C satisfies $30 \leq C \leq 40$. In some embodiments, the mass percentage C% of the carboxylate is 5%, 10%, 15%, 20%, 25%, 30%, 35%, 40%, 45%, 50%, 55%, 60%, or a value falling within a range formed by any two thereof.

In some embodiments, $7 \leq D \leq 60$. In some embodiments, $10 \leq D \leq 50$. In some embodiments, $15 \leq D \leq 45$. In some embodiments, $20 \leq D \leq 30$. In some embodiments, the mass percentage D% of the linear carbonate is 7%, 10%, 15%, 20%, 25%, 30%, 35%, 40%, 45%, 50%, 55%, 60%, or a value falling within a range formed by any two thereof.

When the mass percentage of the non-fluorinated cyclic carbonate, the fluorinated cyclic carbonate, the carboxylate, and/or the linear carbonate in the electrolyte solution fall within the above ranges, this application can optimize a solid electrolyte interface (SEI) film formed on the active material layer of the electrode by the electrolyte solution during cycling, and reduce the gassing phenomena of the electrolyte solution at a high temperature or enhance the cycling kinetics of the electrolyte solution, thereby further improving the storage safety of the electrochemical device in a high-temperature and high-humidity environment.

Without departing from the essence of this application, the types of the non-fluorinated cyclic carbonate, the fluorinated cyclic carbonate, the carboxylate, and/or the linear carbonate may be any appropriate carbonate and/or carboxylate in this field.

In some embodiments, the non-fluorinated cyclic carbonate includes at least one or more of ethylene carbonate, propylene carbonate, vinylene carbonate, or vinyl ethylene carbonate.

In some embodiments, the fluorinated cyclic carbonate includes one or more of fluorinated ethylene carbonate or difluoroethylene carbonate.

In some embodiments, the linear carbonate includes one or more of dimethyl carbonate, diethyl carbonate, ethyl methyl carbonate, trifluoroethyl methyl carbonate, trifluoromethyl ethylene carbonate, or bis(2,2,2-trifluoroethyl) carbonate.

In some embodiments, the carboxylate includes a compound represented by the following Formula I:

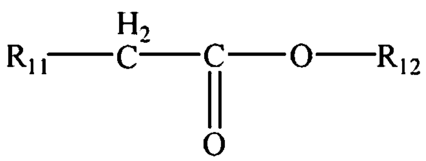

Formula I.

In the formula above:

$R_{11}$ is selected from hydrogen, hydroxyl, a substituted or unsubstituted $C_1$ to $C_{12}$ alkyl, a substituted or unsubstituted $C_1$ to $C_{12}$ alkoxyl, a substituted or unsubstituted $C_2$ to $C_{12}$ alkenyl, a substituted or unsubstituted $C_6$ to $C_{12}$ aryl, or a substituted or unsubstituted $C_6$ to $C_{26}$ aryloxy;
$R_{12}$ is selected from hydrogen, a substituted or unsubstituted $C_1$ to $C_{20}$ alkyl, a substituted or unsubstituted $C_2$ to $C_{12}$ alkenyl, or a substituted or unsubstituted $C_6$ to $C_{26}$ aryl; and
A substituent for the substitution is halogen.

In some embodiments, the carboxylate includes one or more of propyl propionate, ethyl propionate, ethyl acetate, ethyl formate, methyl acetate, propyl acetate, butyl butyrate, ethyl difluoroacetate, difluoroethyl acetate, ethyl trifluoroacetate, trifluoroethyl acetate, methyl propionate, or methyl trifluoropropionate.

According to some other embodiments of this application, controlling the water content in the electrolyte solution

by a vacuum drying process prior to injection of the electrolyte solution can further reduce the hydrofluoric acid (HF) generated by the reaction between water and the lithium salt. In some embodiments, the water content of the electrolyte solution is r ppm, satisfying: $200 \leq r \leq 2000$. In some embodiments, $500 \leq r \leq 1000$. In some embodiments, the water content r (ppm) in the electrolyte solution is 200, 300, 400, 500, 600, 700, 800, 900, 1000, 1100, 1200, 1300, 1400, 1500, 1600, 1700, 1800, 1900, or 2000, or a value falling within a range formed by any two thereof.

In some embodiments, the electrolyte solution further includes an additive. Without departing from the essence of this application, the additive may be any appropriate additive in the art.

In some embodiments, the electrolyte solution further includes a nitrile compound to improve stability of the SEI film. The nitrile compound includes one or more of compounds represented by the following Formula II to Formula V:

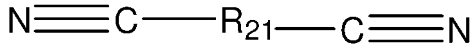 Formula II,

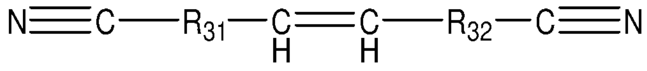 Formula III,

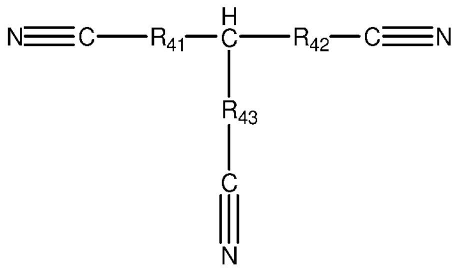 Formula IV,

and

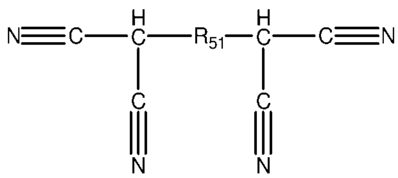 Formula V.

In the formulas above:

$R_{21}$ is selected from a substituted or unsubstituted $C_1$ to $C_{12}$ alkylidene or a substituted or unsubstituted $C_1$ to $C_{12}$ alkyleneoxy;
$R_{31}$ and $R_{32}$ each independently are selected from a single bond or a substituted or unsubstituted $C_1$ to $C_{12}$ alkylidene;
$R_{41}$, $R_{42}$, and $R_{43}$ each independently are selected from a single bond, a substituted or unsubstituted $C_1$ to $C_{12}$ alkylidene, or a substituted or unsubstituted $C_1$ to $C_{12}$ alkyleneoxy;
$R_{51}$ is selected from a substituted or unsubstituted $C_1$ to $C_{12}$ alkylidene, a substituted or unsubstituted $C_2$ to $C_{12}$ alkenylene, a substituted or unsubstituted $C_6$ to $C_{26}$ arylene, or a substituted or unsubstituted $C_2$ to $C_{12}$ heterocyclylene group; and
A substituent for the substitution is halogen.

In some embodiments, the nitrile compound includes one or more of the following compounds: malononitrile, succinonitrile, glutaronitrile, adiponitrile, pimelonitrile, suberonitrile, sebaconitrile, 3,3'-oxydipropionitrile, hex-2-enedinitrile, fumaronitrile, 2-pentenedinitrile, methyl glutaronitrile, 4-cyanopimelonitrile, (Z)-but-2-enedinitrile, 2,2,3,3-tetrafluorosuccinonitrile, ethylene glycol bis(propionitrile) ether, 1,3,5-pentanetricarbonitrile, 1,3,6-hexanetricarbonitrile, 1,2,6-hexanetricarbonitrile, 1,2,3-tris(2-cyanoethoxy)propane, 1,1,3,3-propanetetracarbonitrile,

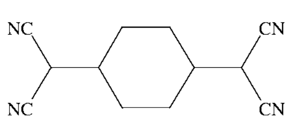 , 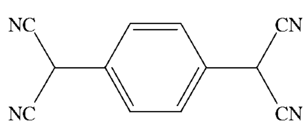 ,

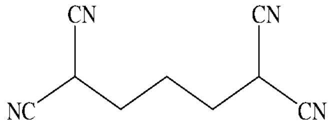 , 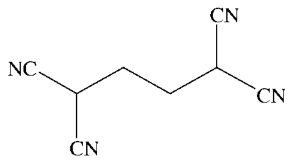 , 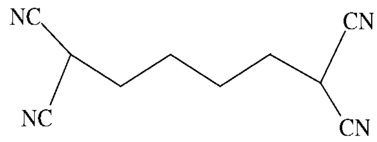 ,

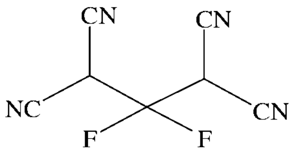 , 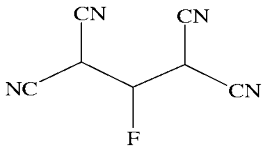 , or 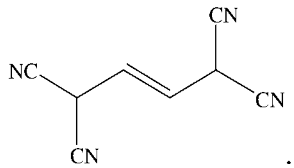 .

In some embodiments, based on the mass of the electrolyte solution, the mass percentage of the nitrile compound is 0.5% to 10%. In some embodiments, based on the mass of the electrolyte solution, the mass percentage of the nitrile compound is 1% to 8%. In some embodiments, based on the mass of the electrolyte solution, the mass percentage of the nitrile compound is 3% to 8%. In some embodiments, based on the mass of the electrolyte solution, the mass percentage of the nitrile compound is 3% to 6%. In some embodiments, the mass percentage of the nitrile compound is 0.1%, 0.2%, 0.5%, 1.0%, 2.0%, 5.0%, 8.0%, 10%, 12%, or a value falling within a range formed by any two thereof.

The cyano group in the nitrile compound is highly coordinative, and can complex with high-valence metal ions (for example, nickel, cobalt, and manganese) on the surface of the electrode to mask the ionic activity, suppress the decomposition and gassing of the electrolyte solution on the surface of the electrode, and enhance the oxidation resistance of the electrolyte solution, thereby improving the safety of the electrochemical device in a high-temperature and high-voltage environment.

In some embodiments, the electrolyte solution further includes a lithium salt. The lithium salt includes one or more of $LiPF_6$, $LiBF_4$, $LiAsF_6$, $LiClO_4$, $LiB(C_6H_5)_4$, $LiCH_3SO_3$, $LiCF_3SO_3$ (LiFSI), $LiN(SO_2CF_3)_2$ (LiTFSI), $LiC(SO_2CF_3)_3$, $LiSiF_6$, LiBOB, or LiDFOB.

In some embodiments, the mass percentage of the lithium salt is 5% to 20% based on the mass of the electrolyte solution. In some embodiments, the mass percentage of the lithium salt is 5%, 7%, 8%, 9%, 10%, 11%, 12%, 13%, 14%, 15%, 16%, 17%, 18%, 19%, 20%, or a value falling within a range formed by any two thereof. Controlling the content of the lithium salt can optimize the storage performance of the electrochemical device in a high-temperature and high-humidity environment.

The tab is an electrode terminal electrically connected to the electrode assembly and extending through the battery package to the outside. As shown in FIG. 1, the tab includes a tab metal strap 10. The tab metal strap 10 includes a head blank foil region 101, a tab adhesive coverage region 102, and an ending connection region 103 sequentially along a length direction. A tab adhesive 20 is disposed on the tab adhesive coverage region 102. The head blank foil region 101 is configured to connect any appropriate external connecting piece. The ending connection region 103 is configured to be electrically connected to the electrode assembly of the electrochemical device.

The tab adhesive covers the tab adhesive coverage region. The tab adhesive is joined to the battery package, and combines with the battery package to form a sealing portion. In some embodiments, the outermost layer of the tab adhesive further includes a molten resin layer. The tab adhesive is molten together with the battery package to form a sealing portion. In a high-temperature and high-humidity environment, the thickness of the tab adhesive is prone to be affected by the ambient humidity or the interactive reactions of the constituents of the electrolyte solution, thereby causing an impact onto the sealing structure of the electrochemical device. The thickness of the tab adhesive may be tested by any appropriate method/apparatus in this field. In some embodiments, a specific method for testing the thickness of the tab adhesive is as follows: placing the sealing portion of the electrochemical device in a way shown in the schematic side view of FIG. 1 or FIG. 2; measuring the thickness of the double-layer tab adhesive of the sealing portion by using a high-precision CCD gauge (with an accuracy of 5 micrometers or a higher accuracy), and denoting the thickness as 2t (mm); and calculating the thickness of a single-layer tab as t (mm).

In some embodiments, $0.025 \leq t \leq 0.14$. In some embodiments, $0.03 \leq t \leq 0.10$. In some embodiments, $0.05 \leq t \leq 0.10$. In some embodiments, the thickness of the tab adhesive, denoted as t (mm), is 0.025, 0.03, 0.04, 0.05, 0.06, 0.07, 0.08, 0.09, 0.10, 0.11, 0.12, 0.13, 0.14, or a value falling within a range formed by any two thereof. When the thickness of the tab adhesive falls within the above range, the erosion of the tab adhesive by the electrolyte solution is reduced, thereby further improving the storage safety of the electrochemical device in a high-temperature and high-humidity environment.

Based on the preparation process of the electrochemical device, the junction between the tab adhesive and the tab metal strap is an easily peelable region in the sealing portion of the battery. When the electrochemical device deforms or expands due to stress, the junction between the tab adhesive and the tab metal strap will be peeled off first. Therefore, the adhesion force of the tab adhesive to the tab adhesive coverage region is equivalent to the tensile sealing force applied

to the electrochemical device. In some embodiments, the adhesion force of the tab adhesive to the tab metal strap affects the effect of isolation between the electrolyte solution and the external environment, and in turn, affects the sealing strength of the overall electrochemical device and the structural safety during cycling.

In some embodiments, an adhesion force of the tab adhesive to the tab adhesive coverage region is f N/mm, satisfying: $3 \leq f \leq 55$. In some embodiments, $5 \leq f \leq 50$. In some embodiments, $10 \leq f \leq 40$. In some embodiments, $20 \leq f \leq 30$. In some embodiments, f is 3, 5, 10, 15, 20, 25, 30, 35, 40, 45, 50, 55, or a value falling within a range formed by any two thereof. When the adhesion force of the tab adhesive to the tab adhesive coverage region falls within the above range, the tab adhesive can provide excellent sealing and bonding strength, thereby preventing external moisture from penetrating into the battery in a high-humidity environment, preventing internal erosion of the electrolyte solution, and in turn, further improving the storage safety of the electrochemical device in a high-temperature and high-humidity environment.

The battery package may be any appropriate package in this field. In some embodiments, the battery package is an aluminum laminated film. In some embodiments, the tab structure of this application is cited from the tab structure of a secondary battery disclosed in Chinese patent application CN106784998A. In the secondary battery, the tab adhesive of a composite tab is bonded to an outer package laminated film to form the sealing portion, thereby imparting sufficient sealing strength to the electrode assembly of the secondary battery. Chinese patent application CN106784998A is incorporated herein by reference in its entirety to provide a specific illustrative embodiment of the structures of the tab and the sealing portion of the electrochemical device of this application.

As shown in FIG. 2, in some embodiments, the battery package further includes an outer package laminated film 30. The outer package laminated film 30 can correspond to the position at which the tab 10 and the tab adhesive 20 of the electrochemical device are disposed, and can overlap and be joined to the tab adhesive coverage region 102 to form a sealing portion. The outer package laminated film 30 includes an outer resin layer 301, a metal layer 302, and an inner resin layer 303 that are stacked in sequence. In some embodiments, a first binder layer (not shown in the drawings) is further included between the outer resin layer 301 and the metal layer 302, and a second binder layer (not shown in the drawing) is further included between the metal layer 302 and the inner resin layer 303. In some embodiments, in the outer package laminated film 30, a matte layer (not shown in the drawings) may be disposed outside the outer resin layer.

In some embodiments, the electrochemical device is a lithium-ion battery. The lithium-ion battery further includes an electrode assembly. Without departing from the essence of this application, the structure of the electrode assembly in the electrochemical device of this application may be any appropriate electrode assembly in the art, and constitutes no limitation. In some embodiments, the electrode assembly assumes a jelly-roll structure or a multi-tab structure. In some embodiments, the electrode assembly may assume a stacked structure or a multi-tab structure. In some embodiments, the electrode assembly includes a positive electrode, a negative electrode, and a separator. The separator is disposed between the positive electrode plate and the negative electrode plate.

The positive electrode includes a positive current collector and a positive active material layer. The positive current collector may be aluminum foil or nickel foil. However, other positive current collectors commonly used in the art may be used without limitation. In some embodiments, the positive active material layer includes a positive active material capable of absorbing and releasing lithium (Li) (hereinafter sometimes referred to as "positive active material capable of absorbing/releasing lithium Li"). Without departing from the essence of this application, specific types of the positive active material are not limited, and may be selected according to requirements. Examples of the positive active material capable of absorbing/releasing lithium (Li) may include one or more of lithium cobalt oxide, lithium nickel cobalt manganese oxide, lithium nickel cobalt aluminum oxide, lithium manganese oxide, lithium iron manganese phosphate, lithium vanadium phosphate, lithium vanadyl phosphate, lithium iron phosphate, lithium titanium oxide, and a lithium-rich manganese-based materials.

In some embodiments, the positive active material layer may further include a binder. A person skilled in the art understands that, without departing from the essence of this application, the binder may be made of any appropriate binder material in the art. In some embodiments, the binder includes, but is not limited to, one or more of polyvinylidene fluoride, vinylidene fluoride-hexafluoropropylene copolymer, polyamide, polyacrylonitrile, polyacrylate, polyacrylic acid, polyacrylate, sodium carboxymethyl cellulose, polyvinylpyrrolidone, polyvinyl ether, poly methyl methacrylate, polytetrafluoroethylene, or polyhexafluoropropylene.

In some embodiments, the positive active material layer may further include a conductive agent. A person skilled in the art understands that, without departing from the essence of this application, the conductive agent may be made of any appropriate conductive agent material in the art. In some embodiments, the conductive agent includes, but is not limited to, one or more of a carbon-based material (for example, natural graphite, artificial graphite, carbon black, acetylene black, Ketjen black, and carbon fibers), a metal material (for example, metal powder, metal fibers, including one or more of elemental copper, elemental aluminum, or elemental silver), or a conductive polymer (for example, a polyphenylene derivative).

A negative electrode includes a current collector and a negative active material layer disposed on the current collector. The negative current collector may be selected from a copper foil, nickel foil, stainless steel foil, or titanium foil. However, other negative current collectors commonly used in the art may be used without limitation. In some embodiments, the negative active material layer includes a negative active material capable of absorbing and releasing lithium (Li) (hereinafter sometimes referred to as "negative active material capable of absorbing/releasing lithium Li"). Without departing from the essence of this application, specific types of the negative active material are not limited, and may be selected according to requirements. Examples of the negative active material capable of absorbing and releasing lithium include one or more of natural graphite, artificial graphite, mesocarbon microbeads (MCMB for short), hard carbon, soft carbon, silicon, a silicon-carbon composite, a Li-Sn alloy, a Li-Sn-O alloy, Sn, SnO, $SnO_2$, spinel-structured lithiated $TiO_2$-$Li_4Ti_5O_{12}$, or a Li-Al alloy.

In some embodiments, the negative active material layer may include a binder, and optionally, may further include a conductive agent. Without departing from the essence of this application, the binder and/or conductive agent may be made of any appropriate binder material and/or conductive agent material in the art. Examples of the binder and/or conductive agent are similar to those enumerated above as the binder and/or conductive agent in the positive active material layer, and are omitted here.

A separator is disposed between the positive electrode and the negative electrode to prevent a short circuit. The material and the shape of the separator applicable to an embodiment of this application are not particularly limited, and may be based on any technology disclosed in the prior art. In some embodiments, the separator includes a polymer or an inorganic compound or the like formed from a material that is stable to the electrolyte solution disclosed in this application. In some embodiments, the separator includes, but is not limited to, at least one of polyethylene, polypropylene, polyethylene terephthalate, polyimide, and aramid.

Understandably, without departing from the essence of this application, a method for preparing an electrochemical device and methods for preparing components in the electrochemical device (the components include the tab, electrolyte solution, the battery package, the positive electrode, the negative electrode, and the separator) according to an embodiment of this application may be any appropriate preparation method in the art, without being limited by the embodiments of this application. In an implementation of the method for manufacturing an electrochemical device, the method for preparing a lithium-ion battery includes: winding, folding, or stacking the negative electrode, the separator, the positive electrode in the preceding embodiments sequentially to form an electrode assembly; putting the electrode assembly into a battery package, and injecting an electrolyte solution; and then performing steps such as vacuum sealing, static standing, chemical formation, and shaping for the packaged electrode assembly to obtain a lithium-ion battery. In some embodiments, the method for manufacturing an electrochemical device further includes a vacuum-drying step before injection of the electrolyte solution. To be specific, the electrode assembly is put into the battery package, and the battery not filled with the electrolyte solution is baked and dried.

Some embodiments of this application further provide an electronic device. The electronic device includes the electrochemical device according to an embodiment of this application.

The electronic device according to embodiments of this application is not particularly limited. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

## DETAILED DESCRIPTION OF EMBODIMENTS

To illustrate the technical solutions of this application more clearly, the following sets out some specific embodiments and comparative embodiments and tests the electrochemical devices (lithium-ion batteries) prepared therein.

I. Test methods

1.1 Testing the mass of constituents in the electrolyte solution

Discharging a lithium-ion battery at a constant current of 0.1 C until the voltage reaches 2.8 V, weighing the battery and recording the weight of the battery as m, and then disassembling the battery, and immediately putting the bare electrode assembly obtained from the disassembled battery and the outer package aluminum laminated film foil into high-purity acetonitrile (purity ≥ 99.9%) to undergo extraction. Performing a gas chromatography test for a clear liquid derived from the extraction, so as to obtain a relative content p of each constituent in the electrolyte solution. Drying, in a vacuum oven, the bare cell that has been subjected to the extraction and the outer package aluminum laminated film foil, weighing the total mass of the dried bare cell and outer package aluminum laminated film foil, and recording the total weight as m'.

The mass of the electrolyte solution is n = m - m', and the mass of each constituent in the electrolyte solution is a

product of the mass n of the electrolyte solution and the relative content p of the constituent. For example, the mass of propionate (PP) = n × p (relative content of propionate).

1.2 Testing the water content in the electrolyte solution

Performing the test with reference to the method for testing the mass of each constituent in the electrolyte solution described in section 1.1 above, putting the specimen into a specified mass of high-purity acetonitrile to undergo extraction and obtain a clear liquid, and testing the water content r by using a Karl Fischer titration method at a test temperature of 15 °C to 28 °C at an ambient humidity lower than 1%. The test result of the water content r is a percentage of water in the electrolyte solution after the mass of acetonitrile is excluded.

1.3 Testing the tensile sealing force (adhesion force of the tab adhesive to the tab metal strap)

Discharging the lithium-ion battery at a constant current of 0.1 C until the voltage reaches 2.8 V, disassembling the battery, cutting a sealing portion at a tab in the disassembled battery into a specimen of 6 mm in width, and clamping the specimen to a GoTech tensile machine. Setting the ambient temperature, increasing the temperature to a preset value 85 °C, and then keeping the temperature for 5 min. Stretching the specimen at a tensile speed of 175±5 mm/min at a temperature of 180°, and recording the tensile sealing force f (N/mm) upon peel-off.

1.4 Testing the storage safety in a high-temperature and high-humidity environment

Discharging a lithium-ion battery at a current of 0.2 C in a 25 °C normal-temperature environment until the voltage drops to 3.0 V, and then charging the battery at a current of 1 C until the voltage reaches 4.48 V, at which the battery is in an initial state. Measuring the thickness $\eta$ of the lithium-ion battery in the initial state by using a screw micrometer. Subsequently, placing the lithium-ion battery into an environment of 85 °C and 40% humidity, leaving the battery to stand for 18 hours, and measuring the thickness $\eta'$ of the lithium-ion battery by using a screw micrometer. Calculating the thickness change rate of the lithium-ion battery as $(\eta'/\eta-1)\times 100\%$.

II. Preparation methods

2.1 Preparing a positive electrode

Mixing lithium cobalt oxide ($LiCoO_2$) as a positive active material, conductive carbon black (Super P), and polyvinylidene difluoride (PVDF) at a mass ratio of 97: 1: 2, adding N-methyl pyrrolidone (NMP) as a solvent, and stirring well with a vacuum mixer to obtain a positive electrode slurry. Coating a positive current collector aluminum foil with the positive electrode slurry evenly, and oven-drying the foil at 90 °C. Subsequently, performing steps of cold pressing, cutting, and slitting to obtain a positive electrode.

2.2 Preparing a negative electrode

Mixing artificial graphite as a negative active material, sodium carboxymethyl cellulose (CMC) as a thickener, and styrene-butadiene rubber (SBR) as a binder at a mass ratio of 97: 1: 2. Adding deionized water, and stirring the mixture with a vacuum mixer to obtain a negative electrode slurry. Coating a negative current collector copper foil with the negative electrode slurry evenly, drying the coated copper foil, and performing cold pressing, cutting, and slitting. Drying the electrode plate in a vacuum environment to obtain a negative electrode plate.

2.3 Preparing an electrolyte solution

Mixing, in an environment with a water content lower than 150 ppm (in a dry argon atmosphere), the carbonate solvent and the carboxylate solvent at a mixing ratio set out in Table 1, adding additives based on the settings in each embodiment or comparative embodiment, dissolving and stirring well the additives, and then adding a lithium salt; and mixing the mixture well to obtain an electrolyte solution. It is hereby noted that,

In Comparative Embodiment 1-1, a conventional solvent is employed, and mixed at a ratio of EC: PC: DEC = 1: 2: 7. The mixing ratios between the constituents in the solvent in each comparative embodiment and/or embodiment are set according to Table 1. In Embodiments 2-1 to 2-9 and Embodiments 3-1 to 3-13, the mass percentages of the carbonate solvent and the carboxylate solvent remain the same as those in Embodiment 1-4. In Embodiment 2-10, the mass percentages of the carbonate solvent and the carboxylate solvent remain the same as those in Embodiment 1-16.

In the comparative embodiments and/or embodiments shown in Table 1 and Table 2, no nitriles are added, and

the types and contents of the lithium salts used therein are consistent with those in Embodiment 1-4. In order to illustrate the contrast between different contents and types of the nitrile compounds and lithium salts, relevant experiments are performed and recorded in Table 3.

The abbreviations of constituents in the electrolyte solutions and the corresponding compound names in the following embodiments and comparative embodiments are set out below:

| Abbreviation | Compound |
|---|---|
| PP | Propyl propionate |
| EP | Ethyl propionate |
| EA | Ethyl acetate |
| DFEP | Ethyl difluoroacetate |
| DEC | Diethyl carbonate |
| EMC | Ethyl methyl carbonate |
| FEMC | Methyl trifluoroethyl carbonate |
| EC | Ethylene carbonate |
| PC | Propylene carbonate |
| FEC | Fluoroethylene carbonate |
| DFEC | Difluoroethylene carbonate |

2.4 Separator

Using a 12 μm-thick polyethylene (PE) porous polymer film as a separator.

2.5 Preparing a lithium-ion battery

Stacking the positive electrode plate, the separator, and the negative electrode plate sequentially in a winding manner, and placing the separator between the positive electrode and the negative electrode to serve a function of separation. Dehydrating the wound electrode assembly at a high temperature, and connecting the ending connection region of the tab to obtain a dry electrode assembly. Putting the dry electrode assembly into an aluminum laminated film, injecting the prepared electrolytic solution, and performing steps such as vacuum packaging, static standing, chemical formation, shaping, and capacity test to obtain a pouch-type lithium-ion battery. It is hereby noted that,

In the comparative embodiments and embodiments set out in Table 1, the tab adhesives disposed on the tabs are of different thicknesses, and maintain the same packaging parameter conditions. In the embodiments set out in Table 2, different tensile sealing forces can be obtained by adjusting the sealing pressure and sealing time applied to the heat sealing portion.

The tab assumes the tab structure of the secondary battery disclosed in Chinese patent application CN106784998A. In the secondary battery, the tab adhesive of a composite tab is bonded to the outer package laminated film to form the sealing portion, thereby imparting sufficient sealing strength to the electrode assembly of the secondary battery. The different thicknesses of the tab adhesives may be adjusted by controlling the molds or the dosage of the polymer in a process of molding the feedstock.

In the comparative embodiments or embodiments set out in Table 1, the water content in the electrochemical device is controlled by applying uniform material preparation environment conditions, uniform process parameters, and uniform requirements for the processing and packaging steps of a bare cell. Specifically, before electrolyte injection, the dry electrode assemblies in the comparative embodiments and embodiments in Table 1 are baked and dried at 80 °C for 5 hours, and the sealing pressure is 0.45 MPa applied for a duration of 3 s.

In the embodiments set out in Table 2, different water contents are obtained by adjusting the drying temperature and drying time for the dry electrode assemblies before electrolyte injection. Specifically, in Embodiment 2-1, the baking and drying before electrolyte injection are performed at 80 °C for 5 hours; in Embodiments 2-2 and 2-3, the baking and drying before electrolyte injection are performed at 80 °C for 7 hours; in Embodiments 2-4 and 2-9, the baking and drying before electrolyte injection are performed at 90 °C for 5 hours; in Embodiments 2-5, 2-6, and 2-10, the baking and drying before electrolyte injection are performed at 90 °C for 7 hours; in Embodiment 2-7, the baking and drying before electrolyte injection are performed at 90 °C for 8 hours; and, in Embodiment 2-8, the baking and drying before electrolyte injection are

performed at 90 °C for 9 hours. In the embodiments set out in Table 2, different tensile sealing forces can be obtained by adjusting the sealing pressure and sealing time applied to the heat sealing portion. In Embodiment 2-2, the sealing pressure is 0.45 MPa applied for 3 s; in Embodiments 2-1 and 2-3, the sealing pressure is 0.6 MPa applied for 3 s; in Embodiments 2-4 and 2-5, the sealing pressure is 0.45 MPa applied for 3 s; in Embodiments 2-6 and 2-8, the sealing pressure is 0.3 MPa applied for 3 s; in Embodiment 2-7, the sealing pressure is 0.28 MPa applied for 3s; in Embodiment 2-9, the sealing pressure is 0.9 MPa applied for 5 s; in Embodiment 2-10, the sealing pressure is 0.4 MPa applied for 3 s.

III. Test results

Table 1 sets out the relationship between the electrolyte solution constituents and the thickness of the tab adhesive as well as the test results of storage safety in a high-temperature and high-humidity environment according to some embodiments and comparative embodiments of this application.

**Table 1**

| Item | Tab adhesive thickness t (mm) | Ingredients of electrolytic solution | | | | | | | | | | 0.005×(C/-D+5) | Thickness change rate |
|---|---|---|---|---|---|---|---|---|---|---|---|---|---|
| | | Carboxylate | | Linear carbonate | | Non-fluorinated cyclic carbonate | | Fluorinated cyclic carbonate | | A/B | C/D | | |
| | | Type | Content C% | Type | Content D% | Type | Content A% | Type | Content B% | | | | |
| Comparative Embodiment 1-1 | 0.06 | N/A | N/A | DEC | 70 | EC<br>PC | 10<br>20 | N/A | N/A | N/A | N/A | N/A | 132% |
| Comparative Embodiment 1-2 | 0.06 | N/A | N/A | DEC | 60 | EC<br>PC | 10<br>20 | FEC | 10 | 3.00 | N/A | N/A | 174% |
| Comparative Embodiment 1-3 | 0.02 | PP | 30 | DEC | 35 | EC<br>PC | 10<br>20 | FEC | 5 | 6.00 | 0.86 | 0.029 | Electrolyt e leak |
| Embodiment 1-1 | 0.06 | PP | 5 | DEC | 60 | EC<br>PC | 10<br>20 | FEC | 5 | 6.00 | 0.08 | 0.025 | 121% |
| Embodiments 1 to 2 | 0.06 | PP | 11 | DEC | 54 | EC<br>PC | 10<br>20 | FEC | 5 | 6.00 | 0.20 | 0.026 | 113% |
| Embodiments 1 to 3 | 0.06 | PP | 20 | DEC | 45 | EC<br>PC | 10<br>20 | FEC | 5 | 6.00 | 0.44 | 0.027 | 90% |
| Embodiments 1 to 4 | 0.06 | PP | 30 | DEC | 35 | EC<br>PC | 10<br>20 | FEC | 5 | 6.00 | 0.86 | 0.029 | 85% |
| Embodiments 1 to 5 | 0.06 | PP | 49 | DEC | 16 | EC<br>PC | 10<br>20 | FEC | 5 | 6.00 | 3.06 | 0.040 | 78% |
| Embodiments 1 to 6 | 0.08 | PP | 56 | DEC | 7 | PC | 30 | FEC | 7 | 4.29 | 8.00 | 0.065 | 105% |
| Embodiments 1 to 7 | 0.06 | EP | 30 | DEC | 35 | EC<br>PC | 10<br>20 | FEC | 5 | 6.00 | 0.86 | 0.029 | 88% |
| Embodiments 1 to 8 | 0.06 | EA | 30 | DEC | 35 | EC | 10 | FEC | 5 | 6.00 | 0.86 | 0.029 | 93% |

(continued)

| Item | Tab adhesive thickness t (mm) | Ingredients of electrolytic solution | | | | | | | | | | 0.005x(C/D+5) | Thickness change rate |
|---|---|---|---|---|---|---|---|---|---|---|---|---|---|
| | | Carboxylate | | Linear carbonate | | Non-fluorinated cyclic carbonate | | Fluorinated cyclic carbonate | | A/B | C/D | | |
| | | Type | Content C% | Type | Content D% | Type | Content A% | Type | Content B% | | | | |
| | | | | | | PC | 20 | | | | | | |
| Embodiments 1 to 9 | 0.06 | DFEP | 30 | DEC | 35 | EC<br>PC | 5<br>25 | FEC | 5 | 6.00 | 0.86 | 0.029 | 96% |
| Embodiments 1 to 10 | 0.10 | PP | 30 | DEC | 35 | EC<br>PC | 10<br>20 | FEC | 5 | 6.00 | 0.86 | 0.029 | 68% |
| Embodiments 1 to 11 | 0.14 | PP | 30 | DEC | 35 | EC<br>PC | 10<br>20 | FEC | 5 | 6.00 | 0.86 | 0.029 | 89% |
| Embodiments 1 to 12 | 0.06 | PP | 30 | DEC | 36 | EC<br>PC | 17<br>10 | FEC | 7 | 3.86 | 0.83 | 0.029 | 99% |
| Embodiments 1 to 13 | 0.06 | PP<br>EP | 20<br>20 | DEC | 37 | PC | 20 | FEC | 3 | 6.67 | 1.08 | 0.030 | 43% |
| Embodiments 1 to 14 | 0.08 | PP<br>EP | 30<br>12 | DEC<br>EMC | 15<br>10 | EC<br>PC | 15<br>15 | DFEC | 3 | 10.00 | 1.68 | 0.033 | 56% |
| Embodiments 1 to 15 | 0.08 | PP | 50 | DEC | 8.2 | EC<br>PC | 25<br>15 | FEC | 1.8 | 22.22 | 6.10 | 0.056 | 118% |
| Embodiments 1 to 16 | 0.08 | PP<br>DFEP | 30<br>8 | DEC<br>FEMC | 10<br>10 | EC<br>PC | 5<br>30 | FEC | 7 | 5.00 | 1.90 | 0.035 | 48% |
| Embodiments 1 to 17 | 0.035 | PP | 30 | DEC | 35 | EC<br>PC | 10<br>20 | FEC | 5 | 6.00 | 0.86 | 0.029 | 93% |
| Embodiments 1 to 18 | 0.026 | PP<br>EP | 10<br>5 | DEC | 60 | PC | 20 | FEC | 5 | 4.00 | 0.25 | 0.026 | 106% |
| Embodiments 1 to 19 | 0.06 | PP<br>EP | 20<br>20 | DEC | 38.5 | PC | 20 | FEC | 1.5 | 13.33 | 0.41 | 0.027 | 40% |
| Embodiments 1 to 20 | 0.06 | PP<br>EP | 20<br>20 | DEC | 10 | PC | 40 | FEC | 10 | 4.00 | 4.00 | 0.045 | 103% |

(continued)

| Item | Tab adhesive thickness t (mm) | Ingredients of electrolytic solution | | | | | | | | | | 0.005x(C/D+5) | Thickness change rate |
|---|---|---|---|---|---|---|---|---|---|---|---|---|---|
| | | Carboxylate | | Linear carbonate | | Non-fluorinated cyclic carbonate | | Fluorinated cyclic carbonate | | A/B | C/D | | |
| | | Type | Content C% | Type | Content D% | Type | Content A% | Type | Content B% | | | | |
| | | | | | | PC | 20 | | | | | | |
| Embodiments 1 to 21 | 0.04 | EP | 5 | DEC | 50 | PC | 38 | FEC | 7 | 5.43 | 0.10 | 0.026 | 116% |
| Embodiments 1 to 22 | 0.06 | PP | 45 | DEC | 42 | PC | 10 | FEC | 3 | 3.33 | 0.86 | 0.029 | 91% |
| Embodiments 1 to 23 | 0.06 | PP | 49 | DEC | 35 | PC | 15 | FEC | 1 | 15.00 | 0.86 | 0.029 | 83% |
| Embodiments 1 to 24 | 0.06 | PP | 50 | DEC | 6 | EC<br>PC | 10<br>30 | FEC | 4 | 6.00 | 8.33 | 0.067 | 109% |
| Note: "N/A" means absence of the corresponding value. | | | | | | | | | | | | | |

As can be seen from the test results in Table 1, Comparative Embodiment 1-1 shows that, without using the carboxylate and the fluorinated cyclic carbonate, the electrolyte solution containing a linear carbonate and a non-fluorinated cyclic carbonate is prone to expand in a high-temperature and high-humidity environment. In Comparative Embodiment 1-2, although the fluorinated cyclic carbonate is further added into the electrolyte solution, the optimization performed by the fluorinated cyclic carbonate for the SEI film is unable to effectively reduce the gas generated by the carbonate solvent in the electrolyte solution, thereby resulting in relatively large expansion of the lithium-ion battery in a high-temperature and high-humidity environment. As shown in Comparative Embodiment 1-3, when the thickness of the tab adhesive is deficient, that is, less than 0.025 mm, the hermeticity of the tab adhesive is relatively low. After the electrolyte solution infiltrates the tab, electrolyte leak occurs, thereby reducing the storage safety of the lithium-ion battery.

In contrast to the comparative embodiment, as shown in Embodiments 1-1 to 1-24, when the thickness of the tab adhesive in the lithium-ion battery is 0.025 mm to 0.14 mm, and when the electrolyte solution includes a non-fluorinated cyclic carbonate, a fluorinated cyclic carbonate, a carboxylate, and a linear carbonate, the gassing phenomena of the lithium-ion battery is effectively reduced, and the thickness change rate of the lithium-ion battery stored for a period in a high-temperature and high-humidity environment is reduced, thereby enhancing the storage safety of the lithium-ion battery.

Further, when the thickness t (mm) of the tab adhesive, the mass percentage A% of the non-fluorinated cyclic carbonate, the mass percentage B% of the fluorinated cyclic carbonate, the mass percentage C% of the carboxylate, and the mass percentage D% of the linear carbonate satisfy at least one of the following conditions: $0.005 \times (C/D + 5) \leq t \leq 0.14$, $0.1 \leq C/D \leq 8$, or $4 \leq A/B \leq 20$, the thickness change rate of the lithium-ion battery stored for a period in a high-temperature and high-humidity environment is further reduced, thereby enhancing the storage safety of the lithium-ion battery.

When the lithium-ion battery satisfies at least one of the following conditions: $10 \leq A \leq 40$; $20 \leq A \leq 40$; $1 \leq B \leq 10$; $1.5 \leq B \leq 7$; $5 \leq C \leq 60$; $20 \leq C \leq 50$; $7 \leq D \leq 60$; $15 \leq D \leq 45$; $0.2 \leq C/D \leq 4$; and $0.025 \leq t \leq 0.10$, the thickness change rate of the lithium-ion battery stored for a period in a high-temperature and high-humidity environment is further reduced, thereby enhancing the storage safety of the lithium-ion battery.

Table 2 sets out the relationship between the water content in the electrolyte solution and the tensile sealing force as well as the test results of storage safety in a high-temperature and high-humidity environment according to some embodiments of this application. Except the parameters set out in Table 2, the settings in Embodiments 2-1 to 2-9 are the same as those in Embodiment 1-4, and the settings in Embodiment 2-10 are the same as those in Embodiment 1-16.

Table 2

| Item | Water content r (ppm) | Tensile sealing force *f* (N/mm) | Thickness change rate |
|---|---|---|---|
| Embodiment 1-4 | 2235 | 14 | 85% |
| Embodiment 2-1 | 2235 | 20 | 84% |
| Embodiment 2-2 | 1893 | 14 | 81% |
| Embodiment 2-3 | 1946 | 20 | 54% |
| Embodiment 2-4 | 1038 | 12 | 31% |
| Embodiment 2-5 | 522 | 12 | 16% |
| Embodiment 2-6 | 534 | 5 | 24% |
| Embodiment 2-7 | 345 | 4 | 9% |
| Embodiment 2-8 | 200 | 5 | 12% |
| Embodiment 2-9 | 1030 | 55 | 23% |
| Embodiment 1-16 | 2303 | 14 | 48% |
| Embodiment 2-10 | 564 | 10 | 12% |

The results show that, when the lithium-ion battery fulfills at least one of the following conditions: $200 \leq r \leq 2000$ and $3 \leq f \leq 55$, the storage safety of the electrochemical device in a high-temperature and high-humidity environment is further improved.

Table 3 sets out the additives, types of lithium salts, and the test results of storage safety in a high-temperature and high-humidity environment according to some embodiments of this application. Except the parameters set out in Table 3, the settings in Embodiments 3-1 to 3-13 are the same as those in Embodiment 1-4.

**Table 3**

| Item | Electrolyte solution | | | | 1 Thickness change rate |
|---|---|---|---|---|---|
| | Nitrile compound | | Lithium salt | | |
| | Type | Content (%) | Type | Content (%) | |
| Embodiment 1-4 | N/A | N/A | $LiPF_6$ | 15% | 85% |
| Embodiment 3-1 | Glutaronitrile | 3% | $LiPF_6$ | 15% | 83% |
| Embodiment 3-2 | Glutaronitrile | 12% | $LiPF_6$ | 15% | 81% |
| Embodiment 3-3 | 1,3,6-hexanetricarbonitrile | 3% | $LiPF_6$ | 15% | 82% |
| Embodiment 3-4 | 1,3,6-hexanetricarbonitrile<br>Glutaronitrile | 3%<br>3% | $LiPF_6$ | 15% | 82% |
| Embodiment 3-5 | Glutaronitrile | 3% | $LiPF_6$ | 5% | 66% |
| Embodiment 3-6 | Glutaronitrile | 3% | $LiPF_6$ | 8% | 70% |
| Embodiment 3-7 | 1,3,6-hexanetricarbonitrile<br>Glutaronitrile<br>Succinonitrile | 3%<br>3%<br>2% | $LiPF_6$ | 15% | 80% |
| Embodiment 3-8 | 1,3,6-hexanetricarbonitrile<br>Glutaronitrile<br>Succinonitrile | 3%<br>3%<br>2% | $LiBF_4$ | 15% | 63% |
| Embodiment 3-9 | 1,3,6-hexanetricarbonitrile<br>Glutaronitrile<br>Succinonitrile | 3%<br>3%<br>2% | LiFSI | 15% | 52% |
| Embodiment 3-10 | 1,3,6-hexanetricarbonitrile<br>Glutaronitrile<br>Succinonitrile | 3%<br>3%<br>2% | $LiPF_6$<br>LiFSI | 12%<br>3% | 78% |
| Item | Electrolyte solution | | | | Thickness change rate |
| | Nitrile compound | | Lithium salt | | |
| | Type | Content (%) | Type | Content (%) | |
| Embodiment 3-11 | 1,3,6-hexanetricarbonitrile<br>Glutaronitrile<br>Succinonitrile | 3%<br>3%<br>2% | $LiPF_6$<br>LiFSI<br>LiBOB | 10%<br>4%<br>1% | 71% |
| Embodiment 3-12 | 1,3,6-hexanetricarbonitrile<br>Glutaronitrile<br>Succinonitrile | 3%<br>3%<br>2% | $LiPF_6$<br>LiFSI<br>LiDFOB | 10%<br>5%<br>2% | 47% |
| Embodiment 3-13 | 1,3,6-hexanetricarbonitrile | 1% | $LiPF_6$ | 15% | 84% |
| Note: "N/A" means absence of the corresponding value. | | | | | |

The results show that, by adding 0.1% to 12% nitrile compounds into the electrolyte solution, this application further improves the storage safety of the electrochemical device in a high-temperature and high-humidity environment.

In addition, controlling the content of the lithium salt in the electrolyte solution to fall within the range of 5% to 20% can further improve the storage safety of the electrochemical device in a high-temperature and high-humidity environment.

References to "embodiments", "part of embodiments", "an embodiment", "another example", "example", "specific example" or "some examples" throughout the specification mean that at least one embodiment or example in this application includes specific features, structures, materials, or characteristics described in the mentioned embodiment(s) or example(s). Therefore, descriptions throughout the specification, which make references by using expressions such as "in some embodiments", "in an embodiment", "in one embodiment", "in another example", "in an example", "in a specific example", or "example", do not necessarily refer to the same embodiment(s) or example(s) in this application. In addition, specific features, structures, materials, or characteristics herein may be combined in one or more

embodiments or examples in any appropriate manner.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

## Claims

1. An electrochemical device, comprising a tab and an electrolyte solution, wherein

   the tab comprises a tab metal strap; the tab metal strap comprises a head blank foil region, a tab adhesive coverage region, and an ending connection region along a length direction; a tab adhesive is disposed on the tab adhesive coverage region; and a thickness of the tab adhesive is t mm, satisfying: $0.025 \leq t \leq 0.14$; and
   the electrolyte solution comprises a non-fluorinated cyclic carbonate, a fluorinated cyclic carbonate, a carboxylate, and a linear carbonate.

2. The electrochemical device according to claim 1, wherein, based on a mass of the electrolyte solution, a mass percentage of the non-fluorinated cyclic carbonate is A%, a mass percentage of the fluorinated cyclic carbonate is B%, a mass percentage of the carboxylate is C%, and a mass percentage of the linear carbonate is D%; and
   the electrochemical device satisfies at least one of the following relations:

   (1)

$$0.005 \times (C/D + 5) \leq t;$$

   (2)

$$0.1 \leq C/D \leq 8;$$

   or
   (3)

$$4 \leq A/B \leq 20.$$

3. The electrochemical device according to claim 2, wherein the electrolyte solution satisfies at least one of the following relations:

   (1)

$$10 \leq A \leq 40;$$

   (2)

$$1 \leq B \leq 10;$$

   (3)

$$5 \leq C \leq 60;$$

   or
   (4)

$$7 \leq D \leq 60.$$

4. The electrochemical device according to claim 2, wherein the electrochemical device satisfies at least one of the

following relations:

(a)

$$0.2 \leq C/D \leq 4;$$

(b)

$$0.03 \leq t \leq 0.10;$$

or
(c)

$$4 \leq A/B \leq 15.$$

5. The electrochemical device according to claim 1, wherein an adhesion force of the tab adhesive to the tab adhesive coverage region is f N/mm, satisfying: $3 \leq f \leq 55$.

6. The electrochemical device according to claim 1, wherein a water content of the electrolyte solution is r ppm, wherein $200 \leq r \leq 2000$.

7. The electrochemical device according to claim 1, wherein the non-fluorinated cyclic carbonate comprises one or more of ethylene carbonate, propylene carbonate, vinylene carbonate, or vinyl ethylene carbonate; the fluorinated cyclic carbonate comprises one or more of fluorinated ethylene carbonate or difluoroethylene carbonate; and the linear carbonate comprises one or more of dimethyl carbonate, diethyl carbonate, ethyl methyl carbonate, trifluoroethyl methyl carbonate, trifluoromethyl ethylene carbonate, or bis(2,2,2-trifluoroethyl) carbonate.

8. The electrochemical device according to claim 1, wherein the carboxylate comprises a compound represented by Formula I:

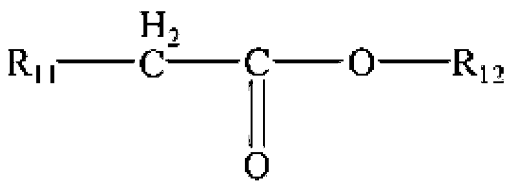

wherein

$R_{11}$ is selected from hydrogen, hydroxyl, a substituted or unsubstituted $C_1$ to $C_{12}$ alkyl, a substituted or unsubstituted $C_1$ to $C_{12}$ alkoxyl, a substituted or unsubstituted $C_2$ to $C_{12}$ alkenyl, a substituted or unsubstituted $C_6$ to $C_{12}$ aryl, or a substituted or unsubstituted $C_6$ to $C_{26}$ aryloxy;
$R_{12}$ is selected from hydrogen, a substituted or unsubstituted $C_1$ to $C_{20}$ alkyl, a substituted or unsubstituted $C_2$ to $C_{12}$ alkenyl, or a substituted or unsubstituted $C_6$ to $C_{26}$ aryl; and
a substituent for the substitution is halogen.

9. The electrochemical device according to claim 8, wherein the carboxylate comprises one or more of propyl propionate, ethyl propionate, ethyl acetate, ethyl formate, methyl acetate, propyl acetate, butyl butyrate, ethyl difluoroacetate, difluoroethyl acetate, ethyl trifluoroacetate, trifluoroethyl acetate, methyl propionate, or methyl trifluoropropionate.

10. The electrochemical device according to claim 1, wherein the electrolyte solution further comprises a nitrile compound, and, based on a mass of the electrolyte solution, a mass percentage of the nitrile compound is 0.1% to 12%, and the nitrile compound comprises one or more of compounds represented by Formula II to Formula V:

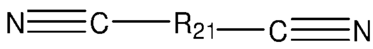 Formula II,

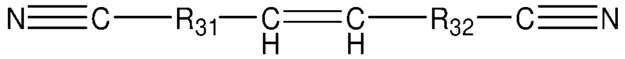 Formula III,

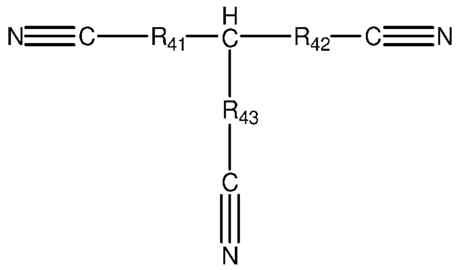 Formula IV,

and

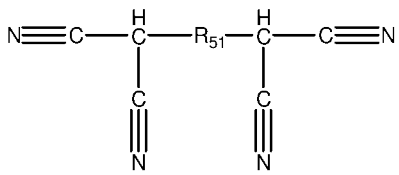 Formula V,

wherein

$R_{21}$ is selected from a substituted or unsubstituted $C_1$ to $C_{12}$ alkylidene or a substituted or unsubstituted $C_1$ to $C_{12}$ alkyleneoxy;
$R_{31}$ and $R_{32}$ each independently are selected from a single bond or a substituted or unsubstituted $C_1$ to $C_{12}$ alkylidene;
$R_{41}$, $R_{42}$, and $R_{43}$ each independently are selected from a single bond, a substituted or unsubstituted $C_1$ to $C_{12}$ alkylidene, or a substituted or unsubstituted $C_1$ to $C_{12}$ alkyleneoxy;
$R_{51}$ is selected from a substituted or unsubstituted $C_1$ to $C_{12}$ alkylidene, a substituted or unsubstituted $C_2$ to $C_{12}$ alkenylene, a substituted or unsubstituted $C_6$ to $C_{26}$ arylene, or a substituted or unsubstituted $C_2$ to $C_{12}$ heterocyclylene group; and
a substituent for the substitution is halogen.

**11.** The electrochemical device according to claim 10, wherein the nitrile compound comprises one or more of the following compounds: malononitrile, succinonitrile, glutaronitrile, adiponitrile, pimelonitrile, suberonitrile, sebaconitrile, 3,3'-oxydipropionitrile, hex-2-enedinitrile, fumaronitrile, 2-pentenedinitrile, methyl glutaronitrile, 4-cyanopimelonitrile, (Z)-but-2-enedinitrile, 2,2,3,3-tetrafluorosuccinonitrile, ethylene glycol bis(propionitrile) ether, 1,3,5-pentanetricarbonitrile, 1,3,6-hexanetricarbonitrile, 1,2,6-hexanetricarbonitrile, 1,2,3-tris(2-cyanoethoxy)propane, 1,1,3,3-propanetetracarbonitrile,

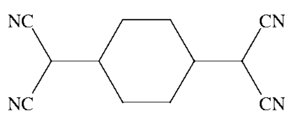 , 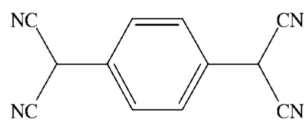 , 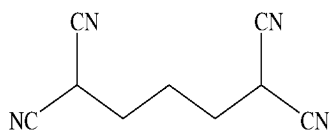 ,

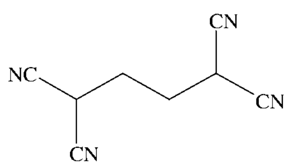 , 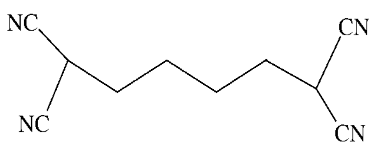 , 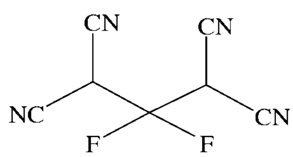 ,

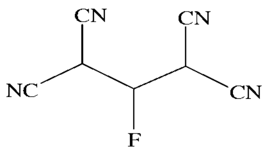
, or
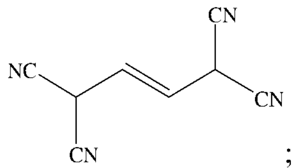
;

and
based on the mass of the electrolyte solution, the mass percentage of the nitrile compound is 1% to 8%.

**12.** The electrochemical device according to claim 1, wherein the electrolyte solution further comprises a lithium salt, the lithium salt comprises one or more of $LiPF_6$, $LiBF_4$, $LiAsF_6$, $LiClO_4$, $LiB(C_6H_5)_4$, $LiCH_3SO_3$, $LiCF_3SO_3$ (LiFSI), $LiN(SO_2CF_3)_2$ (LiTFSI), $LiC(SO_2CF_3)_3$, $LiSiF_6$, LiBOB, or LiDFOB, and the mass percentage of the lithium salt is 5% to 20% based on the mass of the electrolyte solution.

**13.** The electrochemical device according to claim 1, wherein the electrolyte solution satisfies at least one of the following relations:

(5)

$$20 \leq A \leq 40;$$

(6)

$$1.5 \leq B \leq 7;$$

(7)

$$20 \leq C \leq 50;$$

or
(8)

$$15 \leq D \leq 45.$$

**14.** An electronic device, comprising the electrochemical device according to any one of claims 1 to 13.

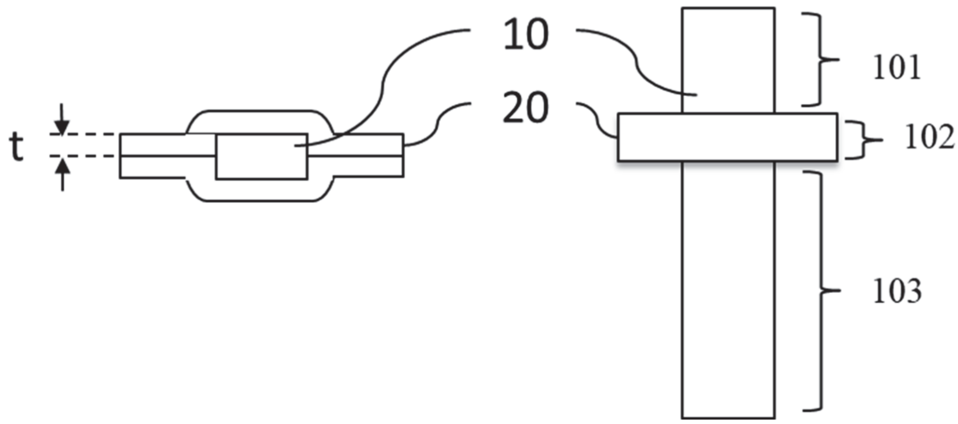


FIG. 1

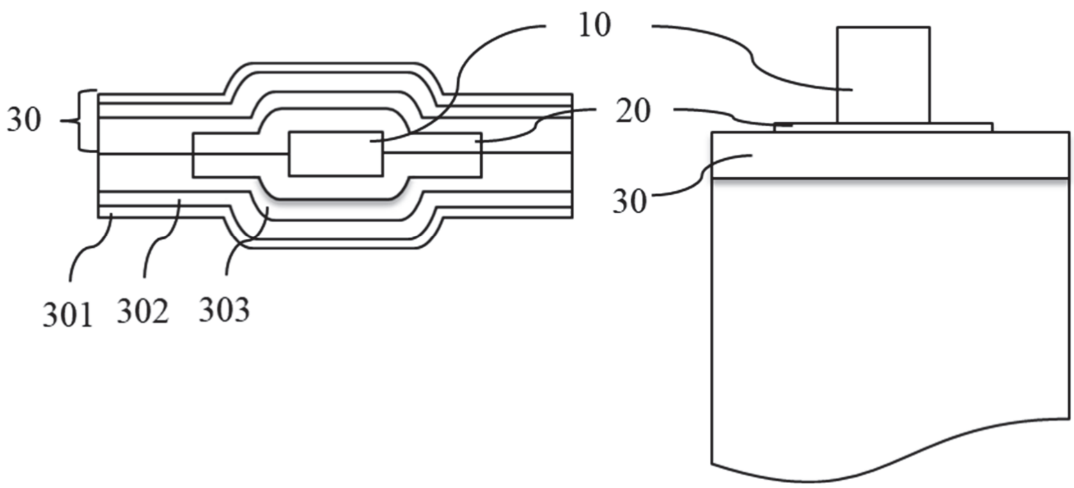


FIG. 2

**INTERNATIONAL SEARCH REPORT**

International application No. **PCT/CN2023/084676**

**A. CLASSIFICATION OF SUBJECT MATTER**

H01M10/04(2006.01)i； H01M10/0569(2010.01)i

According to International Patent Classification (IPC) or to both national classification and IPC

**B. FIELDS SEARCHED**

Minimum documentation searched (classification system followed by classification symbols)

IPC： H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 极耳, 胶, 厚度, 电解液, 环状碳酸酯, 氟代碳酸乙烯酯, 羧酸酯, 线状碳酸酯, 含量, tab, glue, thickness, electrolyte, cyclic carbonate, fluoroethylene carbonate, FEC, carboxylic ester, linear carbonate, content

**C. DOCUMENTS CONSIDERED TO BE RELEVANT**

| Category* | Citation of document, with indication, where appropriate, of the relevant passages | Relevant to claim No. |
|---|---|---|
| X | CN 115148948 A (NINGDE AMPEREX TECHNOLOGY LTD.) 04 October 2022 (2022-10-04)<br>description, paragraphs 46-100, and figure 8 | 1, 5-12, 14 |
| Y | CN 115148948 A (NINGDE AMPEREX TECHNOLOGY LTD.) 04 October 2022 (2022-10-04)<br>description, paragraphs 46-100, and figure 8 | 2-4, 13 |
| Y | CN 104124469 A (XIAMEN UNIVERSITY) 29 October 2014 (2014-10-29)<br>description, paragraphs 6-11 and 14-32 | 2-4, 13 |
| X | CN 106784998 A (NINGDE AMPEREX TECHNOLOGY LTD.) 31 May 2017 (2017-05-31)<br>description, paragraphs 2 and 59-174, and figures 1-6 | 1, 5-12, 14 |
| Y | CN 106784998 A (NINGDE AMPEREX TECHNOLOGY LTD.) 31 May 2017 (2017-05-31)<br>description, paragraphs 2 and 59-174, and figures 1-6 | 2-4, 13 |
| A | JP 2009301954 A (MITSUBISHI CHEMICAL CORP.) 24 December 2009 (2009-12-24)<br>entire document | 1-14 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 December 2023** | **17 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/084676**

| Patent document cited in search report | Publication date (day/month/year) | Patent family member(s) | Publication date (day/month/year) |
|---|---|---|---|
| CN 115148948 A | 04 October 2022 | None | |
| CN 104124469 A | 29 October 2014 | CN 104124469 B | 29 December 2017 |
| CN 106784998 A | 31 May 2017 | None | |
| JP 2009301954 A | 24 December 2009 | JP 5338151 B2 | 13 November 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 106784998 A